# EUROPEAN PATENT APPLICATION

(11) **EP 4 749 911 A1**
(43) Date of publication of application: **27.05.2026**
(21) Application number: 25216571.7
(22) Date of filing: 18.11.2025
(51) Int. Cl.: H02P 8/18

(54) **SYSTEMS AND METHODS FOR JITTER MINIMIZATION BY STEPPER MOTOR CONTROL**

(30) Priority: 22.11.2024 US 202463724191 P
(71) Applicant: MacDonald, Dettwiler and Associates Corporation, Ste-Anne-de-Bellevue, QC H9X 3R2 (CA)
(72) Inventor: LAROUCHE, Steve, Quebec, H9X 3R2 (CA); CHAMBON, Jérémy, Quebec, H9X 3R2 (CA)
(74) Representative: Range, Christopher William

(57) **Abstract**

Provided herein are systems and methods for minimizing jitter. A method for minimizing jitter for at least one sensitive component on a spacecraft includes receiving a rotary actuator speed command indicating a rotary actuator speed for a stepper motor on the spacecraft, setting a stepping mode of the stepper motor to one of a first stepping mode and second stepping mode based on a preconfigured data structure which encodes a corresponding stepping mode for the rotary actuator speed based on a pre-determined jitter-sensitive frequency band, wherein the first stepping mode and the second stepping mode each maintain harmonics of the spacecraft outside of the jitter-sensitive frequency band. A system includes a stepper motor, an onboard processing unit to generate rotary actuator speed commands, and a mechanism control electronics (MCE) subsystem, wherein the MCE subsystem controls a stepping mode of the stepper motor based on a rotary actuator speed command.

## Description

### Technical Field

The following relates generally to stepper motors and more specifically to systems and methods of stepper motor control for minimizing jitter.

### Introduction

Stepper motors function by rotating in a series of steps instead of rotating continuously. Micro-stepping is a control method which drives the stepper motor current to make incremental rotational steps smaller to get close to a perfect sine wave in order to decrease vibration characteristics. In general, the smaller the step, the less torque ripple between each step resulting in a smoother functioning of the stepper motor and a reduction in the vibration characteristics.

Jitter is the generation of responses while operating equipment and herein refers to responses when a large inertia is driven by a stepper motor, in particular for satellites. The jitter responses are amplified at structural modes, with a jitter sensitive frequency band arising when the responses from a jitter load generating apparatus are amplified at the jitter-sensitive apparatus through the modal responses of spacecraft walls (e.g. 150-400 Hz).

When the stepper motor is supplied by a sinusoidal current, mechanical harmonics are generated due to the electromagnetic interaction between the windings and the rotor. For example, driving a motor at a constant 10 steps per seconds will produce harmonics at each 10Hz increment in the frequency domain. This harmonic load decreases as the order of the harmonics increase. For example, the harmonic response of a 1/64 micro-stepping mode with a rotary actuator speed of 1 step per second will generate harmonics at 64 Hz, 128 Hz, 194 Hz, etc.

Additionally, as above, the harmonics are isolated or amplified by the dynamic modes of the structure(s) to which the stepper motor stator and rotor are attached, e.g., antenna and spin wheel modes.

This can be a problem when the attached elements, such as optical links or pointing sensitive equipment on a spacecraft, are sensitive to jitter loads at higher frequency (e.g., 150-400 Hz). As well, spacecraft panel modes can amplify the jitter loads generated by the stepper motors in that same frequency band (e.g., 150-400 Hz).

The first harmonics generated by either full stepping or micro-stepping (e.g., 64 micro-steps per full step) should be kept outside of the pointing sensitive equipment frequency band (e.g., 150-400 Hz) to minimize jitter.

Jitter loads are challenging to analytically predict and require significant empirical data to determine the impact of various parameters associated with a system (e.g., a satellite system), for example motor impedance, current per phase, number of phases, dynamic behaviour of attached structure(s), etc. But the importance of minimizing jitter is significant for space use cases such as satellite constellations which require optical links between satellites for their performance.

However, due to the dynamic nature of the jitter loads within the frequency range of sensitive equipment, a single mode of stepping, either full stepping or micro-stepping, will not be appropriate at all times. Therefore, the stepping mode needs to be controlled dynamically as a function of the rotary actuator speed of the stepper motor.

Accordingly, there is a need for systems and methods which analyze jitter loads to determine an appropriate stepping mode and dynamically switch between stepping modes.

### Summary

Provided herein is a stepper motor control method for minimizing jitter for at least one sensitive component on a spacecraft, including receiving a rotary actuator speed command indicating a rotary actuator speed for a stepper motor on the spacecraft, setting a stepping mode of the stepper motor to one of a first stepping mode and second stepping mode based on a preconfigured data structure which encodes a corresponding stepping mode for the rotary actuator speed based on a pre-determined jitter-sensitive frequency band, wherein the first stepping mode and the second stepping mode each maintain harmonics of the spacecraft outside of the jitter-sensitive frequency band.

The rotary actuator speed command may be continually received and the stepping mode of the stepper motor is dynamically set in response to the rotary actuator speed command.

The first stepping mode may be a full stepping mode, and the second stepping mode may be a micro-stepping mode wherein each step is a fraction of a full step of the full stepping mode.

The preconfigured data structure may include a threshold value for the rotary actuator speed, wherein below the threshold value the corresponding stepping mode is the first stepping mode, and at or above the threshold value the corresponding stepping mode is the second stepping mode.

The preconfigured data structure may include a look-up table wherein each rotary actuator speed of a set of rotary actuator speeds has a corresponding stepping mode which is obtained from the table.

The at least one sensitive component may include multiple sensitive components with different sensitive frequency bands, and the stepper motor has at least a third stepping mode which is set when the rotary actuator speed goes above a second threshold value, wherein the second threshold value is above the first threshold value.

The stepping mode of the stepper motor may be set by sending a current waveform to the stepper motor.

A mechanism control electronics (MCE) subsystem of the spacecraft may perform the receiving and setting.

Provided herein is a system for minimizing jitter on a spacecraft comprising a stepper motor and at least one jitter sensitive component which a sensitive frequency band, the system comprising a stepper motor including a rotary actuator, an onboard processing unit to generate rotary actuator speed commands, a mechanism control electronics (MCE) subsystem communicatively coupled to the stepper motor and the onboard processing unit, wherein the MCE subsystem receives a rotary actuator speed command including a rotary actuator speed, and sets the stepping mode of the stepper motor, wherein when the rotary actuator speed is below a threshold value the stepping mode is set to a first stepping mode, and wherein when the rotary actuator speed is above the threshold value the stepping mode is set to a second stepping mode with micro-steps which are smaller than the steps of the first stepping mode, and wherein the threshold value is determined based on a jitter sensitive frequency band of the at least one sensitive component.

The at least one sensitive equipment may include at least one antenna.

The at least one sensitive equipment may include at least one optical link.

The stepper motor may control pointing of a pointing antenna on the spacecraft and the spacecraft further includes antenna pointing mechanisms and antenna pointing mechanism electronics.

The pointing antenna may be a Ka-band antenna.

The stepper motor may control pointing of a laser beam.

Other aspects and features will become apparent to those ordinarily skilled in the art, upon review of the following description of some exemplary embodiments.

### Brief Description of the Drawings

The drawings included herewith are for illustrating various examples of articles, methods, and apparatuses of the present specification. In the drawings:
Figure 1 is a graph of jitter power spectral density (PSD) vs. frequency (Hz) at a constant rotary actuator (RA) speed of 10 steps/second for a spacecraft;
Figure 2A is a table representing harmonic loads of various rotary actuator (RA) speeds in a full stepping mode of a stepper motor, according to an embodiment;
Figure 2B is a table representing harmonic loads a various rotary actuator (RA) speeds in a micro-stepping mode of a stepper motor, according to an embodiment;
Figure 2C is a table representing a control strategy to reduce harmonic loads transmitted to a spacecraft at various rotary actuator (RA) speeds by changing a stepping mode of a stepper motor, according to an embodiment;
Figure 3 is a graph of the rotational position of a rotor of a stepper motor in a full-step mode and a micro-step mode, according to an embodiment;
Figure 4 is a perspective view of a spacecraft with a stepper motor wherein the spacecraft includes antennas and optical links, according to an embodiment;
Figure 5 is a block diagram of a system for reducing jitter of a spacecraft by changing a stepping mode of a stepper motor, according to an embodiment;
Figure 6 is a flow diagram of a method of controlling a stepping mode of a stepper motor on a spacecraft, according to an embodiment;
Figure 7 is a flow diagram of a method of generating a data structure which encodes a stepping mode for each speed in a set of rotary actuator speeds based on a jitter-sensitive frequency band, according to an embodiment;
Figure 8 is a flow diagram of a method of setting a current stepping mode of a stepper motor based on a required rotary actuator speed and the data structure of Figure 7, according to an embodiment.

### Detailed Description

Various apparatuses or processes will be described below to provide an example of each claimed embodiment. No embodiment described below limits any claimed embodiment and any claimed embodiment may cover processes or apparatuses that differ from those described below. The claimed embodiments are not limited to apparatuses or processes having all of the features of any one apparatus or process described below or to features common to multiple or all of the apparatuses described below.

One or more systems described herein may be implemented in computer programs executing on programmable computers, each comprising at least one processor, a data storage system (including volatile and non-volatile memory and/or storage elements), at least one input device, and at least one output device. For example, and without limitation, the programmable computer may be a programmable logic unit, a mainframe computer, server, and personal computer, cloud-based program or system, laptop, personal data assistance, cellular telephone, smartphone, or tablet device.

Each program is preferably implemented in a high-level procedural or object oriented programming and/or scripting language to communicate with a computer system. However, the programs can be implemented in assembly or machine language, if desired. In any case, the language may be a compiled or interpreted language. Each such computer program is preferably stored on a storage medium or a device readable by a general or special purpose programmable computer for configuring and operating the computer when the storage medium or device is read by the computer to perform the procedures described herein.

A description of an embodiment with several components in communication with each other does not imply that all such components are required. On the contrary, a variety of optional components are described to illustrate the wide variety of possible embodiments of the present invention.

Further, although process steps, method steps, algorithms, or the like may be described (in the disclosure and/or in the claims) in a sequential order, such processes, methods, and algorithms may be configured to work in alternate orders. In other words, any sequence or order of steps that may be described does not necessarily indicate a requirement that the steps be performed in that order. The steps of processes described herein may be performed in any order that is practical. Further, some steps may be performed simultaneously.

When a single device or article is described herein, it will be readily apparent that more than one device/article (whether or not they cooperate) may be used in place of a single device/article. Similarly, where more than one device or article is described herein (whether or not they cooperate), it will be readily apparent that a single device/article may be used in place of the more than one device or article.

The following relates generally to stepper motors and more specifically to systems and methods of stepper motor control for minimizing jitter on a spacecraft.

As described above, equipment which is controlled by a stepper motor as well as any elements attached to said equipment may be subject to jitter which arises due to the movement of the stepper motor. The function of the stepper motor may be to orient an antenna or laser beam from a satellite towards a fixed point on the earth or to another satellite. Such a satellite in a Low Earth Orbit moves relative to either an on-ground target point or other constellation satellites, and, therefore, the antenna or laser beam vector needs to be constantly re-positioned.

In the situation of a spacecraft/satellite, jitter can degrade the performance of pointing-sensitive equipment, for example, jitter can cause antenna de-pointing. The responses to jitter can occur over a large frequency band with harmonics generated at the increments of the motor stepping during motor operation. Stepping strategies have been employed in the past to reduce the response of antenna structural modes to jitter, but usually employ a "two steps forward and then one step back" mode of stepping. Jitter due to high frequency harmonics is a new problem which is not solved using older stepping strategies.

While micro-stepping the stepper motor can decrease the vibration characteristics by making the rotational steps incrementally smaller, the appropriateness of micro-stepping as a stepping mode will depend on the frequency band(s) of the jitter sensitive equipment on the spacecraft (e.g., the pointing-sensitive equipment) and the speed of the rotary actuator of the stepper motor.

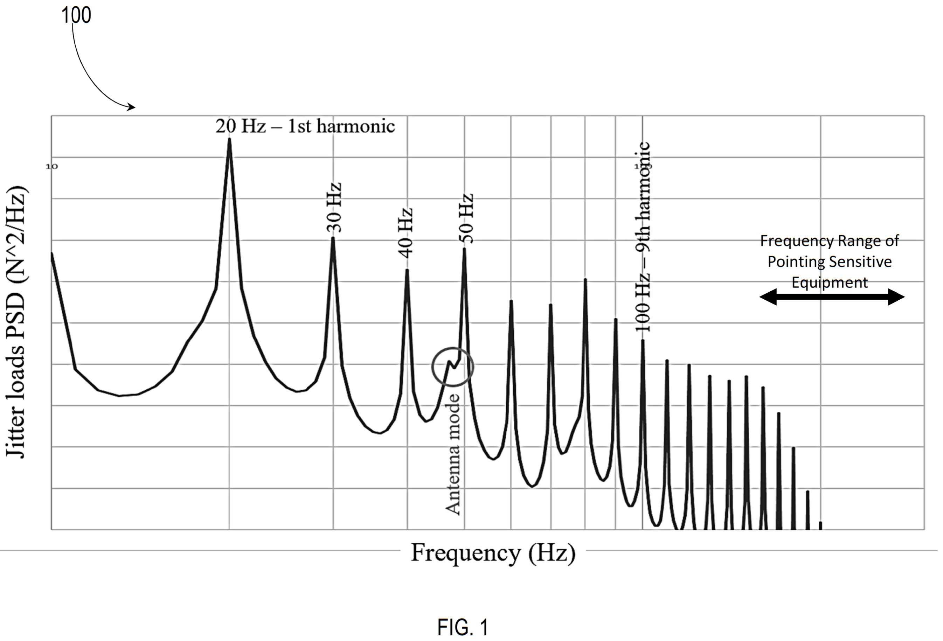

Referring now to Figure 1, shown therein is a graph 100 of jitter power spectral density (PSD) ([N.m]^2/Hz) (on the y-axis) versus frequency (Hz) (on the x-axis) at a constant rotary actuator (RA) speed of 10 steps/second for a spacecraft.

In Figure 1, jitter is measured as forces, strains, or accelerations generated by micro-vibrations. Forces may be measured by piezoelectric loadcells. Strains may be measured by strain gauges. Accelerations may be measured by piezoelectric accelerometers. There is a first harmonic at a frequency of 10 Hz, a second at 20 Hz, a third at 30 Hz, etc., until a tenth harmonic at 100 Hz.

The sensitive frequency band of the pointing-sensitive equipment of the spacecraft of Figure 1 is between 150-400Hz. The stepping mode represented in Figure 1 is a full stepping mode at 10 steps/second. In the full stepping mode, if the steps/second were increased, for example, to 15 steps/second, the tenth harmonic would be in the frequency band of the pointing-sensitive equipment and jitter would be problematic.

If the stepping mode of the stepper motor were switched to a micro-stepping mode of 1/64 steps/second, the first harmonic would be 64Hz, the second harmonic would be 128 Hz, the third harmonic would be 192 Hz, etc. Therefore, in a micro-stepping mode the jitter for the pointing-sensitive equipment would be problematic.

Accordingly, the appropriate choice of stepping mode of the stepper motor depends on the frequency band of the sensitive equipment of the spacecraft.

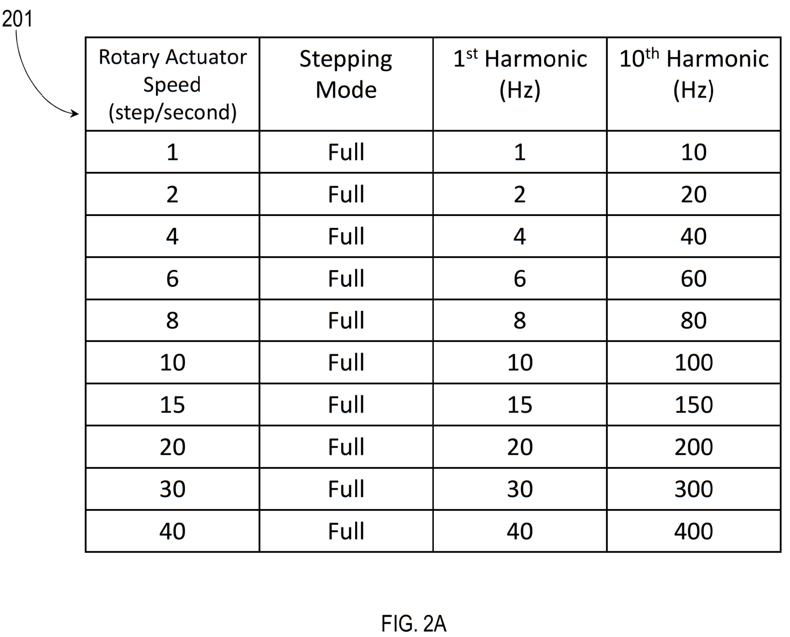

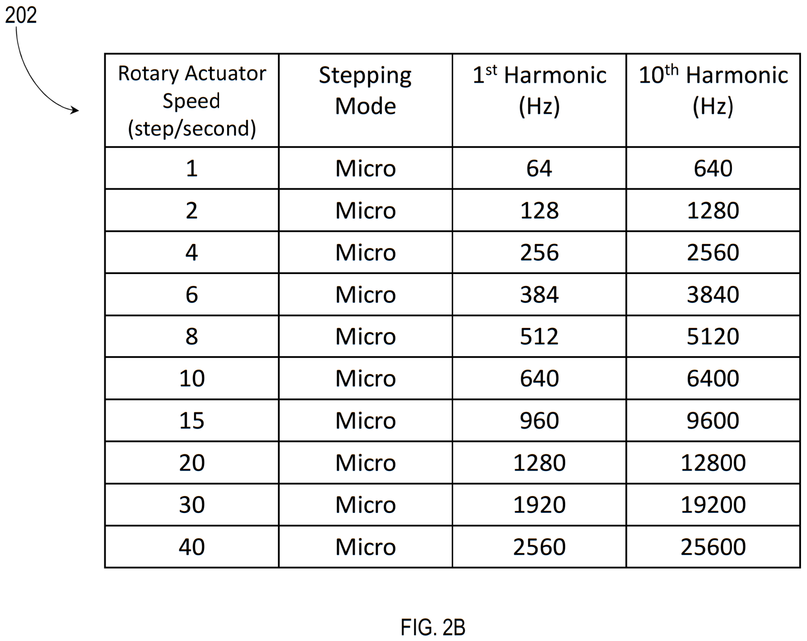

Referring now to Figures 2A-2C, shown therein are tables 201-203 showing the Hz of the 1^{st} and 10^{th} harmonics of a stepper motor at various rotary actuator speeds (steps/second) for different stepping modes.

Table 201 represents the 1^{st} and 10^{th} harmonics for aa stepper motor employing a full stepping mode. Table 202 represents the 1^{st} and 10^{th} harmonics for the stepper motor employing a micro-stepping mode.

Tables 201 and 202 represent only the resulting harmonics for a given speed for each stepping mode and are not meant to represent a control strategy as described herein.

Table 203 represents the 1^{st} and 10^{th} harmonics for a control strategy to reduce harmonic loads transmitted to a spacecraft at various rotary actuator (RA) speeds by changing the stepping mode of a stepper motor between the full stepping mode shown in Table 201 and the micro-stepping mode shown in Table 202, according to an embodiment.

The frequency band of sensitive equipment in Figures 2A-2C is the same as in Figure 1, 150-400 Hz. Tables 201-203 have a first column representing the rotary actuator speed in steps/second, a second column representing the stepping mode, a third column representing the 1^{st} harmonic frequency (Hz), and a fourth column representing the 10^{th} harmonic frequency (Hz).

Table 201 shows that in full stepping mode rotary actuator speeds between 15-40 steps per second cause the 10^{th} harmonic to be within the undesired 150-400 Hz range.

Table 202 shows that in micro-stepping mode rotary actuator speeds at 4 and 6 steps per second cause the 1^{st} harmonic to be within the undesired 15-400 Hz range.

Table 203 shows the outcome of switching from the full stepping mode to the micro-stepping mode when the rotary actuator speed reaches 10 steps per second, which avoids the harmonics which are in the 150-400 Hz region. Table 203 represents a stepping mode strategy which can be employed for actual operation of a spacecraft which carries a stepper motor represented by tables 201 and 202. Therefore, table 203 may be used as an input for a control system for the stepper motor to ensure that the correct stepping mode is used to maintain the harmonics in a specific range. The table 203, or information contained therein, may be encoded as a data structure and stored in a data storage device of the spacecraft. In an embodiment, the data structure may be a lookup table or the like. The data structure may then be used or referenced during execution of a stepping mode control algorithm, such as described herein, by a processor on the spacecraft to determine a stepping mode (e.g., full or micro).

At one, two, four, six, and eight steps/second the stepper motor is in a full stepping mode which respective first harmonics of one, two, four, six, and eight Hz, and respective tenth harmonics of ten, twenty, forty, sixty, and eighty Hz.

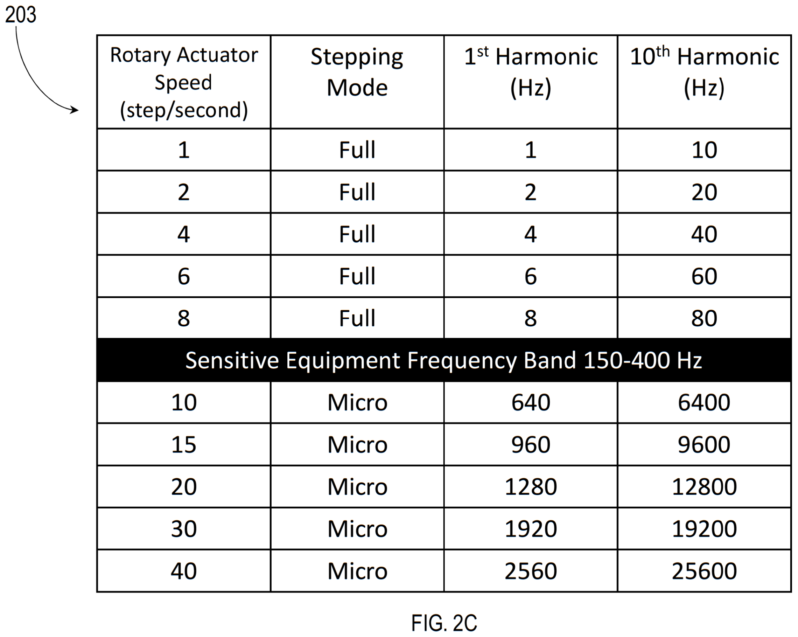

Looking at Figure 1, it can be seen that at 10 steps/second in a full stepping mode, by the fifteenth harmonic the frequency is in the frequency band of the pointing sensitive equipment of the spacecraft. Therefore, to minimize jitter for the spacecraft, the control strategy of Figure 2C switches from full stepping mode to micro-stepping mode for RA speeds at or above 10 steps/second.

At ten and fifteen steps/second, the stepper motor is in micro-stepping mode wherein each step is 1/64^{th} of a step. At ten steps/second the first harmonic is 640 Hz, and the tenth harmonic is 6400 Hz. At fifteen steps/second the first harmonic is 960 Hz, and the tenth harmonic is 9600 Hz.

While switching to a micro-stepping mode reduces the vibration characteristics, the frequency of the harmonics is increased. Therefore, switching to micro-stepping mode is not always a solution to reducing jitter as avoiding a frequency within the frequency band of sensitive equipment is necessary to maintain performance of the various equipment.

If the stepper motor were in micro-stepping mode at lower steps/second than 10, the frequency of some of the harmonics would be in the frequency band of the sensitive equipment of the spacecraft. For example, if the stepper motor were in micro-stepping and operating at 1 step/second, the third harmonic would be 196 Hz, within the 150-400 Hz frequency band of the sensitive equipment.

Accordingly, switching between the two stepping modes enables the stepper motor to operate at a broad range of steps/second while the frequency remains outside of the frequency band of the sensitive equipment of the spacecraft.

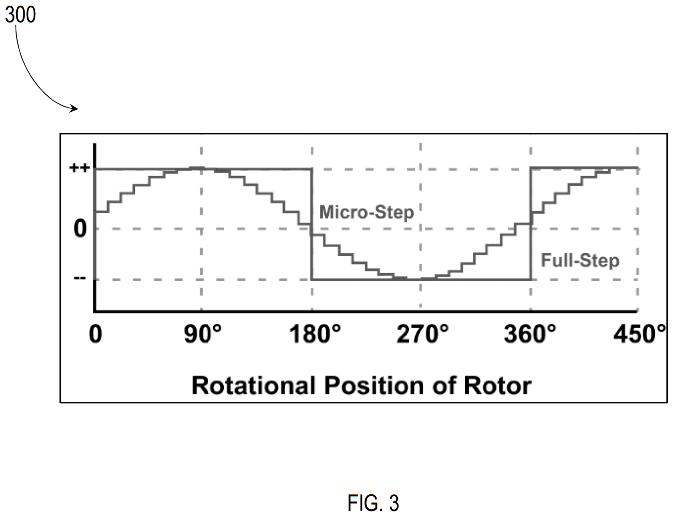

Referring to Figure 3, shown therein is a graph 300 of current waveform supplied at a phase of a stepper motor (current per phase delivered by motor) vs the rotor position of the stepper motor in either a full-step mode or a micro-step mode, according to an embodiment. In a full stepping mode, the waveform switches between positive and negative abruptly at 180° rotational position of the rotor and a 360° rotational position of the motor. In a micro-stepping mode, the waveform is sinusoidal with a positive peak at 90° and a negative peak at 270°.

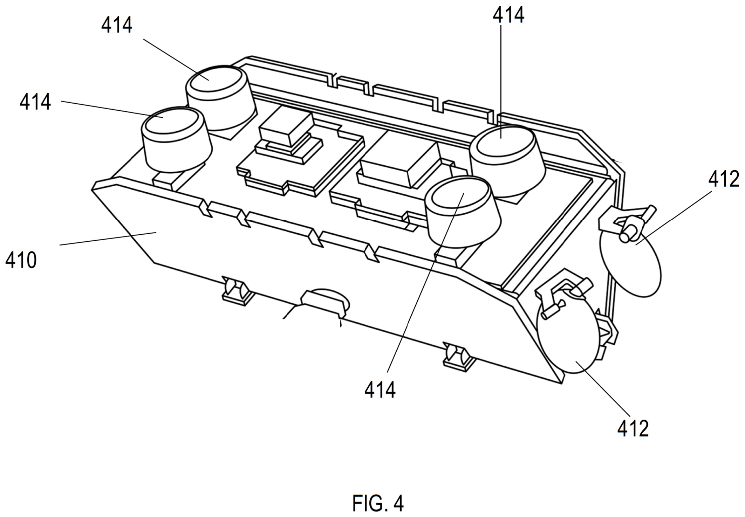

Referring now to Figure 4, shown therein is a perspective view of a spacecraft 410 with antennas 412 and optical links 414, according to an embodiment.

Spacecraft 410 is an example of a spacecraft with at least one stepper motor.

The spacecraft includes two antennas 412 and four optical links 414 which require precise pointing for optimal functioning. The stepper motors are present at the antennas 412. There may be two stepper motors on each antenna. The optical links 414 are laser links which need to reach another spacecraft at a great distance (e.g., 5000km) within a small diameter (e.g. 0.5m), to facilitate maintenance of orbit and for transmission of data between spacecraft. Jitter could affect the optical links by moving the laser links outside of the small diameter window at the other spacecraft, cutting off data transmission.
When a speed of a rotary actuator of a stepper motor is one step/second in a full stepping mode and the harmonic frequency is 1 Hz the mode of the antenna can be excited and cause issues with the functioning of the antenna, but in a micro-stepping mode at 1/64^{th} step the harmonic frequency may be 64 Hz and cause the same issues with the functioning of the antenna. The forces generated by the micro-vibrations at the base of the test article are measured in a time domain (time, force). A Fast Fourier Transform (FFT) is applied on the time domain to derive the Power Density Spectrum (PSD) that shows the intensity of the signal as a function of frequency. The PSD is computed by multiplying each frequency increment of a FFT by its complex conjugate which results in the real only spectrum of amplitude. The amplitude value is then normalized to the frequency increment width, whereby normalizing the PSD is independent from the frequency increment width to enable comparison of micro-vibration levels from different sources.

Each of the antennas 412 and the optical links 414 has a frequency band in which the harmonics of the stepper motor are amplified. The sensitive equipment (e.g., sensitive pointing equipment like antennas and optical links) on a spacecraft are likely to be sensitive to jitter loads at higher frequencies, e.g., 150-400 Hz. However, other sensitive frequency bands may exist. The stepper motor control system as described herein, controls the stepping mode of the stepper motor to avoid harmonic frequencies in the frequency bands of the antennas 412 and optical links 414. The frequency band range is used to calculate a threshold value of a speed (steps/second) of a rotary actuator of the stepper motor such that below the threshold value the stepper motor uses a first stepping mode and above the threshold value the stepper motor uses a second stepping mode, such that the harmonics remain outside of the frequency band(s) of the antennas 412 and the optical links 414.

The frequency bands and threshold values may be predetermined. That is, the sensitivity of any sensitive equipment may be measured before deployment of a spacecraft (i.e., on ground). Such frequency band and threshold values may then be stored in a data storage device of the MCE subsystem 530 (e.g., as part of a data structure) and used as part of a stepping mode control algorithm.

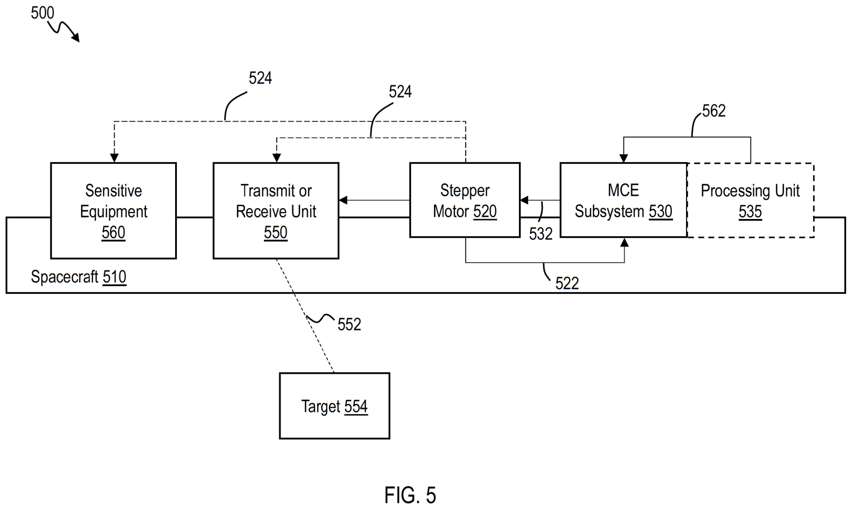

Referring now to Figure 5, shown therein is a block diagram of a stepper motor control system 500 for reducing jitter on a spacecraft 510 by changing a stepping mode 532 of a stepper motor 520 by a mechanism control electronics (MCE) subsystem 530, according to an embodiment. The MCE subsystem 530 may be located within spacecraft 510.

The spacecraft 510 may be any spacecraft in space which requires a stepper motor for any function. The spacecraft 510 includes a transmit or receive unit 550 for transmitting or receiving data, such as an antenna or an optical intersatellite link (OISL), which is actuated by the stepper motor 520 and which may be sensitive to jitter 524 at a specific frequency band. The spacecraft 510 also includes other sensitive equipment 560, which may include any equipment or component which is sensitive to jitter, and may also be an antenna of OISL which is not under the control of stepper motor 520. While sensitive equipment 560 may not be under the control of the stepper motor 520, the jitter 524 caused by the functioning of the stepper motor 520 still affects the performance of the sensitive equipment 560.

The transmit or receive unit 550 may transmit a signal 552 to a target 554 or receive a signal 552 from a target 554. The stepper motor 520 may be involved in antenna pointing and the spacecraft 510 may include antenna pointing mechanisms (APM) and antenna pointing mechanism electronics (APME) for pointing the transmit or receive unit 550.

The transmit or receive unit 550 and the sensitive equipment 560 may be sensitive to jitter such that functions of the components are degraded when too much jitter occurs. For example, if too much jitter occurs the transmit or receive unit 550 may not be able to transmit/receive the signal 552.

The transmit or receive unit 550 may comprise a Ka-band antenna.

Each sensitive element on a spacecraft has a particular frequency band within which degradation of performance occurs. The frequency bands of different sensitive elements may not be the same. The frequency bands of different sensitive elements may or may not overlap. Herein, an example frequency band of 150-400 Hz has been discussed, however, a frequency band may be any range of frequency. The aim of the jitter reduction stepper motor control system is to limit the effect of micro-vibrations to, for example, within a precision of meters over thousand of kilometres of distance for a projected laser beam or other signal, by maintaining the harmonics of the rotary actuator(s) outside of the frequency band.

As mentioned above, the frequency bands of the various sensitive equipment are pre-calculated. As such, using the techniques of the present disclosure, real-time measurement of jitter at the sensitive equipment is not necessary. The harmonics at each rotary actuator speed and stepping mode are pre-measured to determine the stepping mode required to avoid the sensitive frequency band(s) for a given rotary actuator speed.

As described above, when a current is applied to the stepper motor 520, the movement of the stepper motor causes jitter to occur at the spacecraft 510. The frequency of the harmonics of the jitter caused by the stepper motor 520 depends on the rate of stepping (steps/second) of the stepper motor 520.

The stepper motor 520 is communicatively connected to the MCE subsystem 530. The MCE subsystem 530 controls the stepping mode of the stepper motor 520 in response to receiving stepper motor information 522 from the stepper motor 520 and speed commands 562 from an onboard processing unit 535. The stepper motor information 522 includes a stepper motor phase current (e.g., MCE subsystem may sense a phase current of the stepper motor 520). The speed commands 562 are determined by other systems of the spacecraft 510.

The MCE subsystem 530 receives a speed command 562 and determines which stepping mode the stepper motor 520 should employ. The stepper mode determination is based on the predicted harmonic for the phase current as determined from the pre-measured stepper motor harmonics for a given speed, and the pre-calculated frequency bands of the sensitive equipment present on the spacecraft. In making the determination, the MCE subsystem 530 may reference a data structure in a data storage device of processing unit 535 that encodes a relationship between a rotary actuator speed and a corresponding stepping mode, based on the harmonics of the stepper motor and the frequency band(s) of sensitive equipment, such that the stepping mode for the given rotary actuator speed can be retrieved from the data structure.

The onboard processing unit 535 processes the speed command 562 and the stepper motor information 522 to determine which stepping mode is to be used based on predetermined instructions regarding which stepping mode is required for a given rotary actuator speed. The MCE subsystem 530 then provides a current waveform to the stepper motor 520 to set the stepping mode 532 of the stepper motor 520 based on the received data and the predetermined instructions. The onboard processing unit 535 may be a dedicated processing unit used only by the MCE subsystem 530, or the onboard processing unit 535 may be a processing unit which is also used for other functions of the spacecraft 510. The raw data, processed data, and predetermined instructions are stored in a memory (not shown). The memory may be located at processing unit 535.

In an embodiment, control of the stepper motor 520 by the MCE subsystem 530 is in a closed loop system wherein the stepper motor 520 only receives stepping mode instructions from the MCE subsystem 530. In an embodiment, determining the current waveform to be applied by the MCE 530 occurs in an open loop system, wherein the instructions for the functioning of the stepper motor 520 are received from the onboard processing unit 535. Stepper motor 520 control is performed in a speed mode (i.e., the stepper motor is controlled based on the required rotary actuator speed of the stepper motor).

As described above, the steps/second of a rotary actuator of the stepper motor 520 combined with a stepping mode 532 of the stepper motor determines the frequency of mechanical harmonics generated due to the electromagnetic interaction between motor windings and the rotary actuator of the motor. For example, at ten steps/second in a full stepping mode, harmonics are produced at 10 Hz increments starting at 10 Hz (i.e., 10, 20, 30, 40, 50, etc.), and at ten steps/second in a micro-stepping mode wherein each step is 1/64^{th} of a step in a full stepping mode, harmonics are produced at 64 Hz increments starting at 64 Hz (i.e., 64, 128, 192, 256, etc.).
While the vibration of the stepper motor may be reduced in a micro-stepping mode, the frequency of the harmonics is increased. However, having two stepping modes available enables a strategy for avoidance of frequencies within a frequency band(s) of sensitive equipment.

The MCE subsystem 530 may control the stepping mode based on a threshold value for the rotary actuator speed (as determined by the stepper motor phase current 522 received at the MCE subsystem 530). The threshold value may be determined based on a frequency band(s) for jitter sensitive equipment on the spacecraft, such as transmit or receive unit 550 and sensitive equipment 560. When the rotary actuator speed is below the threshold value, the MCE subsystem 530 sends a current waveform which causes the stepper motor 520 to function in a full stepping mode, and when the rotary actuator speed is at or above the threshold value, the MCE subsystem 530 sends a current waveform which causes the stepper motor to function in a micro-stepping mode. Because the frequency of the harmonics depends on both the rotary actuator speed and the stepping mode, controlling the stepping mode of the stepping mode of the stepper motor 520 based on the rotary actuator speed allows for the harmonics frequency to always be outside of the frequency band(s) of sensitive equipment.

Alternatively, in some embodiments, the MCE subsystem 530 may control the stepping mode of the stepper motor checking or referencing a data table or other data structure regarding the appropriate stepping mode for a given stepper motor speed as determined by the stepper motor phase current 522 received at the MCE subsystem 530. That is, for a given stepper motor phase current 522 received, the data table is checked for the corresponding appropriate stepping mode. This control method may enable an embodiment wherein the stepping mode can be switched between stepping modes more than once. That is, in a scenario where the frequency band is 150-400 Hz, the stepping mode may be switched to micro-stepping mode to avoid the full stepping mode at rotary actuator speeds within the frequency band, and then switched back to full stepping mode at higher speeds. Referring again to table 201 of Figure 2A, if the sensitive frequency band were 150-400 Hz, the only speeds which would require micro-stepping would be 15-40 steps/second, and therefore, micro-stepping mode would only be required at those speeds. At speeds above 40 steps/second, the stepping mode could be returned to a full stepping mode.

Control of the stepping mode is a dynamic process, and as the rotary actuator speed (steps/second) changes, the stepping mode may be changed by the MCE subsystem 530 whenever necessary.

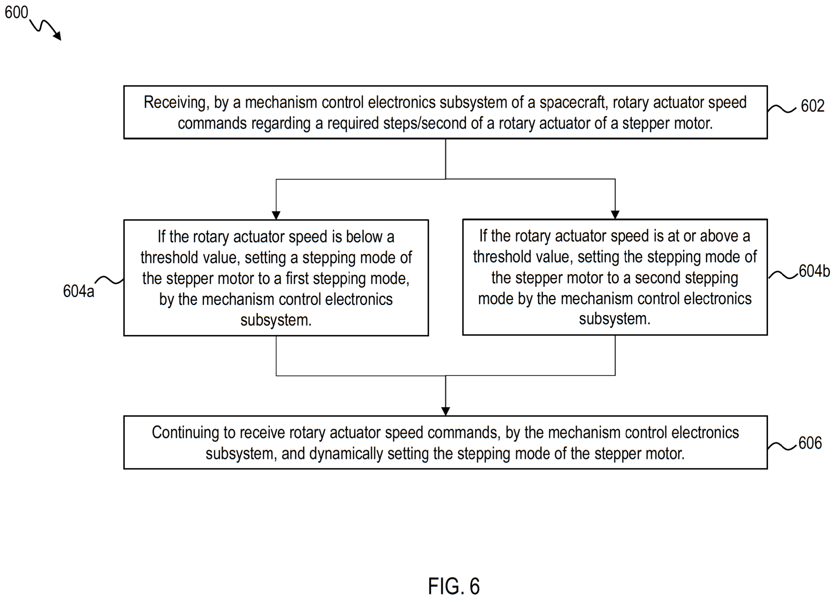

Referring now to Figure 6, shown therein is a flow diagram of a method 600 of using a stepper motor control system to control a stepping mode of a stepper motor on a spacecraft, according to an embodiment.

The stepper motor control system includes a spacecraft with a stepper motor and a MCE subsystem.

The MCE system is communicatively coupled to the spacecraft to receive data from the spacecraft regarding functioning of the stepper motor.

The MCE system is operably connected to the stepper motor to alter a current.

At 602, the MCE subsystem receives rotary actuator speed commands regarding a required steps/second of a rotary actuator of a stepper motor from an onboard processing unit of the spacecraft. The onboard processing unit determines the rotary actuator speed command based on received data. The received data may be received as sensor data that needs to be processed to determine a command or may be received as a request or command that has already be determined by other processing units.

At 604a, when the rotary actuator speed is below a threshold value the MCE subsystem sends a current to the stepper motor which operates the stepper motor in a first stepping mode. The threshold value is determined based on a frequency band(s) of any jitter sensitive equipment present on the spacecraft. The threshold value is the rotary actuator speed at which the stepper motor should switch between two stepping modes to ensure that the frequency of the harmonics remains outside of the frequency band(s).

The first stepping mode may be a full stepping mode.

At 604b, when the rotary actuator speed is at or above a threshold value the MCE subsystem sends a current to the stepper motor which operates the stepper motor in a second stepping mode. The second stepping mode may be a micro-stepping mode in which each step is a fraction of a full step, e.g., 1/64^{th} of a full step.

In some embodiments, there may be more than two stepping modes.

At 606, the MCE subsystem continues to receive rotary actuator speed commands from the onboard processing unit of the spacecraft, and dynamically determines which stepping mode the stepper motor should be operating in.

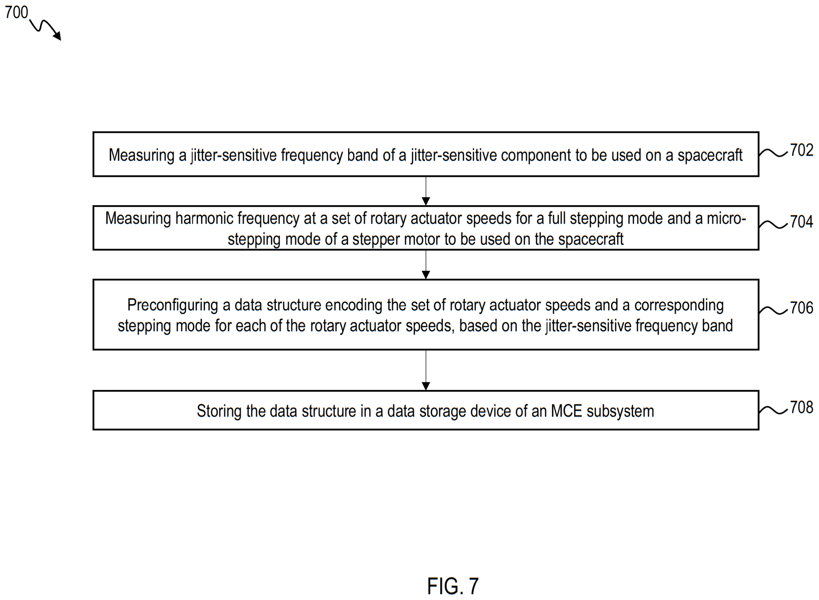

Referring now to Figure 7, shown therein is a method 700 of generating a data structure which encodes a stepping mode for each speed in a set of rotary actuator speeds based on a jitter-sensitive frequency band, according to an embodiment.

At 702, the method 700 includes measuring a jitter-sensitive frequency band of a jitter-sensitive component to be used on a spacecraft. Herein, sensors, e.g., jitter sensors and performance sensors (any sensor which measures the performance of the component), are used to determine a frequency band in which jitter is particularly detrimental to the jitter-sensitive component. That is, the jitter-sensitive frequency band includes the frequency which are to be avoided to ensure proper functioning of the component.

Jitter-sensitive frequency bands may be measured for multiple components which may be present on a spacecraft.

At 704, harmonic frequencies generated by a stepper motor are measured at a set of rotary actuator speeds for both a full stepping mode and a micro-stepping mode. The stepper motor is a stepper motor that may be used on a spacecraft.

At 706, a data structure is preconfigured which encodes a corresponding stepping mode to be used for each speed of the set of rotary actuator speeds, where the corresponding stepping mode is based on the jitter-sensitive frequency band(s). That is, a corresponding stepping mode is encoded for each speed to ensure that the harmonic frequency generated by the stepper motor is always outside of the jitter-sensitive frequency band(s).

The data structure is encoded for a specific stepper motor and the respective jitter-sensitive components which will be present on the spacecraft with the stepper motor. That is, the data structure may be specific to a particular mission or spacecraft and includes jitter-sensitive frequency band(s) for all jitter-sensitive components which will be present on the spacecraft or used in a particular mission for the spacecraft. If a particular spacecraft has more than one stepper motor, each stepper motor which generates different harmonic frequencies will have a corresponding preconfigured data structure (although the jitter-sensitive frequency band(s) will be the same).

At 708, the data structure is stored in a data storage device associated with an MCE subsystem, wherein the MCE subsystem is able to access the preconfigured data structure to control the stepper motor.

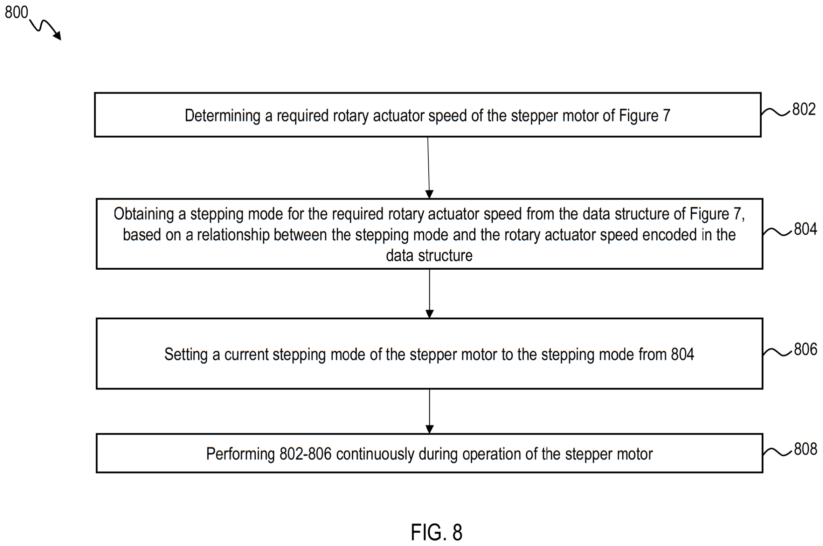

Referring now to Figure 8, shown therein is a method 800 of controlling a stepping mode of a stepper motor based on a required rotary actuator speed and a preconfigured data structure as described in Figure 7, according to an embodiment.

At 802, a required rotary actuator speed of a stepper motor is determined. The speed is determined based on the required function of the stepper motor at that time.

At 804, a stepping mode for the required rotary actuator speed is obtained from a data structure (as described in method 700). The stepping mode is determined by looking up a stepping mode associated with the required actuator speed within the encoded data structure. As described above, the data structure may be in an "if/then" form including a threshold value where if the required rotary actuator speed is above the threshold value then the corresponding stepping mode is micro-stepping and wherein if the required rotary actuator speed is below the threshold then the corresponding stepping mode is full stepping. Alternatively, the data structure may include a look-up table wherein a stepping mode value is returned from the table for a given speed.

At 806, the current stepping mode of the stepper motor is set to the stepping mode which was obtained at 804. The stepping mode is set by providing a current waveform from a MCE subsystem to the stepper motor.

At 808, the acts from 802-806 are repeated during operation of the stepper motor to ensure that jitter within the frequency band(s) does not occur.

While the above description provides examples of one or more apparatus, methods, or systems, it will be appreciated that other apparatus, methods, or systems may be within the scope of the claims as interpreted by one of skill in the art.

What is claimed is the systems and methods as generally and specifically described herein.

## Claims

1. A stepper motor control method for minimizing jitter for at least one sensitive component on a spacecraft, the method comprising:
receiving a rotary actuator speed command indicating a rotary actuator speed for a stepper motor on the spacecraft;
setting a stepping mode of the stepper motor to one of a first stepping mode and second stepping mode based on a preconfigured data structure which encodes a corresponding stepping mode for the rotary actuator speed based on a pre-determined jitter-sensitive frequency band;
wherein the first stepping mode and the second stepping mode each maintain harmonics of the spacecraft outside of the jitter-sensitive frequency band.

2. The method of claim 1, wherein the rotary actuator speed command is continually received, and the stepping mode of the stepper motor is dynamically set in response to the rotary actuator speed command.

3. The method of any one of claims 1 and 2, wherein the first stepping mode is a full stepping mode, and the second stepping mode is a micro-stepping mode wherein each step is a fraction of a full step of the full stepping mode.

4. The method of any one of claims 1 to 3 wherein the preconfigured data structure includes a threshold value for the rotary actuator speed, wherein below the threshold value the corresponding stepping mode is the first stepping mode, and at or above the threshold value the corresponding stepping mode is the second stepping mode.

5. The method of any one of claims 1 to 4 wherein the preconfigured data structure includes a look-up table wherein each rotary actuator speed of a set of rotary actuator speeds has a corresponding stepping mode which is obtained from the table.

6. The method of any one of claims 1 to 5, wherein the at least one sensitive component includes multiple sensitive components with different sensitive frequency bands, and the stepper motor has at least a third stepping mode which is set when the rotary actuator speed goes above a second threshold value, wherein the second threshold value is above the first threshold value.

7. The method of any one of claims 1 to 6, wherein the stepping mode of the stepper motor is set by sending a current waveform to the stepper motor.

8. The method of any one of claims 1 to 7, wherein a mechanism control electronics (MCE) subsystem of the spacecraft performs the receiving and setting.

9. A system for minimizing jitter on a spacecraft comprising a stepper motor and at least one jitter sensitive component which a sensitive frequency band, the system comprising:
a stepper motor including a rotary actuator;
an onboard processing unit to generate rotary actuator speed commands;
a mechanism control electronics (MCE) subsystem communicatively coupled to the stepper motor and the onboard processing unit, wherein the MCE subsystem receives a rotary actuator speed command including a rotary actuator speed, and sets the stepping mode of the stepper motor, wherein when the rotary actuator speed is below a threshold value the stepping mode is set to a first stepping mode, and wherein when the rotary actuator speed is above the threshold value the stepping mode is set to a second stepping mode with micro-steps which are smaller than the steps of the first stepping mode, and wherein the threshold value is determined based on a jitter sensitive frequency band of the at least one sensitive component.

10. The system of claim 9, wherein the at least one sensitive equipment includes at least one antenna.

11. The system of any one of claims 9 and 10, wherein the at least one sensitive equipment includes at least one optical link.

12. The system of any one of claims 9 to 11, wherein the stepper motor controls pointing of a pointing antenna on the spacecraft and the spacecraft further includes antenna pointing mechanisms and antenna pointing mechanism electronics.

13. The system of claim 12, wherein the pointing antenna is a Ka-band antenna.

14. The system of any one of claims 9 to 13, wherein the stepper motor controls pointing of a laser beam.

15. The system of any one of claims 9 to 14, wherein the at least one sensitive component includes multiple sensitive components with different sensitive frequency bands, and the stepper motor has at least a third stepping mode which is set when the rotary actuator speed goes above a second threshold value, wherein the second threshold value is above the first threshold value.
